# EUROPEAN PATENT APPLICATION

(11) **EP 3 190 551 A2**
(43) Date of publication of application: **12.07.2017**
(21) Application number: 15838718.3
(22) Date of filing: 02.09.2015
(51) Int. Cl.: G06Q 10/08

(54) **PHYSICAL DISTRIBUTION MANAGEMENT SYSTEM AND PRICE DETERMINATION METHOD USING SAME**

(30) Priority: 05.09.2014 KR 20140119338
(71) Applicant: Hanmi IT Co., Ltd., Seoul 138-724 (KR)
(72) Inventor: LIM, Jong Hoon, Seoul 138-734 (KR)
(74) Representative: Gulde & Partner
(86) International application number: PCT/KR2015/009221
(87) International publication number: WO 2016/036123

(57) **Abstract**

Disclosed herein is a price determination method using a physical distribution management system, the price determination method including: when the identification information and production information of a product are received from a production management device, determining the basic price of the product based on the production information; when the warehousing and shipping information of the product is received from a warehousing and shipping device provided at each of one or more distribution nodes included in the distribution process of the product, determining a distribution price, determined by renewing the basic price of the product, based on the warehousing and shipping information; and, when the identification information of the product is received from a sales device, determining the final distribution price of the product or a final price calculated by renewing the final distribution price of the product, and providing the final distribution price or final price to the sales device.

## Description

### Technical Field

The present invention relates to a physical distribution management system and a price determination method using the same, and more particularly to a physical distribution management system that manages physical distribution by using the identification tag of each product, thereby enabling the value of the product to be minutely evaluated and the price of the product to be determined accordingly, and a price determination method using the same.

### Background Art

The production companies and distribution companies of products manage and track the production and distribution processes of sold products, thereby determining the quantities of products to be additionally produced or identifying quantities in stock, and identifying improvements that can reduce the costs or times required for the production or distribution of products.

Currently, in order to manage the production and distribution of products, an RFID tag is attached to each produced product, identification information unique to the product is recorded in the RFID tag, and the identification information of the product is identified at each production step and a distribution step, thereby enabling current production and distribution states to be identified and managed.

Meanwhile, with the acceleration of industrialization, most products consumed by users have been mass-produced recently. One of the advantages of such mass production is to equalize the qualities of the same type of products.

Accordingly, the same type of products, i.e., products produced via the same process by the same main agent of production are generally distributed and ultimately sold at the same price.

Nonetheless, products subject to difficulties in uniform quality management during production, distribution, and exhibition processes such as agricultural and livestock products, products sensitive to a difference in the quality of raw material or a difference in a precise process such as medicines, or products produced in a hand-made way have differences in quality even when they are the same type of products. Furthermore, there are cases where it is difficult to maintain quality during a distribution process, like a case where the quality of some products is degraded due to a delay in a distribution period, the passage of an exhibition period, or the like during a distribution process or where fashion is changed.

However, even products that can be evaluated differently in terms of quality are generally sold at the same price when the products are of the same type. In this case, consumers purchase the products having different qualities at the same price. Accordingly, from consumers' point of view, problems arise in that the same product purchasing effect cannot be expected for the same price and consumers having purchased some products having low qualities experience dissatisfaction.

From sellers' point of view, even when they desire to evaluate quality and sell products at different prices, the problem of being cumbersome arises because the sellers of the products must determine the prices of the products and apply the prices to payment processes.

Accordingly, there has been a need for a technology for overcoming the above-described problems.

A conventional art, i.e., Korean Patent Application Publication No. 10-2009-0076259, discloses a physical distribution management system for managing the distribution of products. Although this conventional art describes a system for implementing a physical distribution warehouse capable of checking the state of physical distribution, an error in the amount of physical distribution, a mistake in a distribution process, etc. in real time, this technology still has the above-described problems.

Meanwhile, the above-described background technology corresponds to technical information that has been possessed by the present inventor in order to contrive the present invention or that has been acquired in the process of contriving the present invention, and cannot be necessarily viewed as a well-known technology that had been known to the public before the filing of the present invention.

### Disclosure

### Technical Problem

Accordingly, an object of an embodiment of the present invention is to provide a physical distribution management system that is convenient for each of a producer, a distributor, and a consumer.

Furthermore, an object of an embodiment of the present invention is to provide a physical distribution management system capable of determining the appropriate price of a product through physical distribution management, and a price determination method using this physical distribution management system.

Furthermore, an object of an embodiment of the present invention is to provide a physical distribution management system capable of calculating an appropriate distribution price not only at a final product sales step but also at a product distribution step, and a price determination method using this physical distribution management system.

Moreover, an object of an embodiment of the present invention is to provide a physical distribution management system capable of providing the benefits of product tracking and price determination, attributable to the physical distribution management system, not only to a distributor but also to a final consumer, and a price determination method using this physical distribution management system.

### Technical Solution

As a technical solution for accomplishing the above objects, according to one aspect of the present invention, there is provided a price determination method using a physical distribution management system, which is performed by a physical distribution management server, the price determination method including: when the identification information and production information of a product are received from a production management device operated by a producer, determining the basic price of the product based on the production information; when the warehousing and shipping information of the product is received from a warehousing and shipping device provided at each of one or more distribution nodes included in the distribution process of the product, determining a distribution price, determined by renewing the basic price of the product, based on the warehousing and shipping information; and, when the identification information of the product is received from a sales device operated by the final seller of the product, determining the final distribution price of the product or a final price calculated by renewing the final distribution price of the product, and providing the final distribution price or final price to the sales device.

### Advantageous Effects

According to any one of the above-described technical solutions of the present invention, an embodiment of the present invention can provide a physical distribution management system that is convenient for each of a producer, a distributor, and a consumer.

Furthermore, according to an embodiment of the present invention, the appropriate price of a product can be determined through physical distribution management.

Furthermore, according to an embodiment of the present invention, an appropriate distribution price can be calculated not only at a final product sales step but also at a product distribution step.

Moreover, according to an embodiment of the present invention, the benefits of product tracking and price determination attributable to the physical distribution management system can be provided not only to a distributor but also to a final consumer.

The advantageous effects that can be acquired by the present invention are not limited to the above-described advantageous effects, and other effects that have not been mentioned will be clearly understood by those having ordinary knowledge in the art, to which the present invention pertains, from the following description.

### Description of Drawings

FIG. 1 is a configuration diagram showing the overall configuration of a physical distribution management system according to an embodiment of the present invention;
FIG. 2 is a block diagram showing the configuration of a physical distribution management server included in the physical distribution management system according to the embodiment of the present invention; and
FIG. 3 is a flowchart illustrating a price determination method using a physical distribution management system according to an embodiment of the present invention.

### Mode for Invention

Embodiments of the present invention will be described in detail below with reference to the accompanying drawings so that those having ordinary knowledge in the art to which the present invention pertains can easily practice the present invention. However, the present invention may be implemented in various different forms, and are not limited to the embodiments described herein. Furthermore, in the drawings, parts unrelated to descriptions are omitted in order to clearly describe the present invention, and similar reference symbols are assigned to similar components throughout the specification.

Throughout the specification, when a part is described as being "connected" to another part, this includes not only a case where they are "directly connected" to each other but also a case where they are "electrically connected" to each other with another element interposed therebetween. Furthermore, when a part is described as "including" a component, this means that another component is not be excluded from the part but may be included in the part, unless specifically described to the contrary.

The present invention will be described in detail below with reference to the accompanying diagrams.

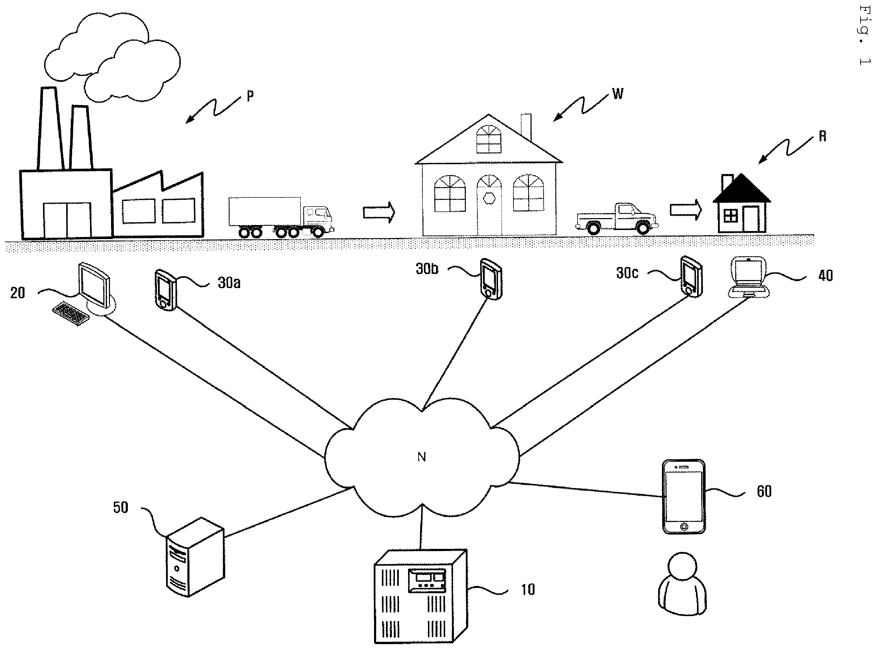

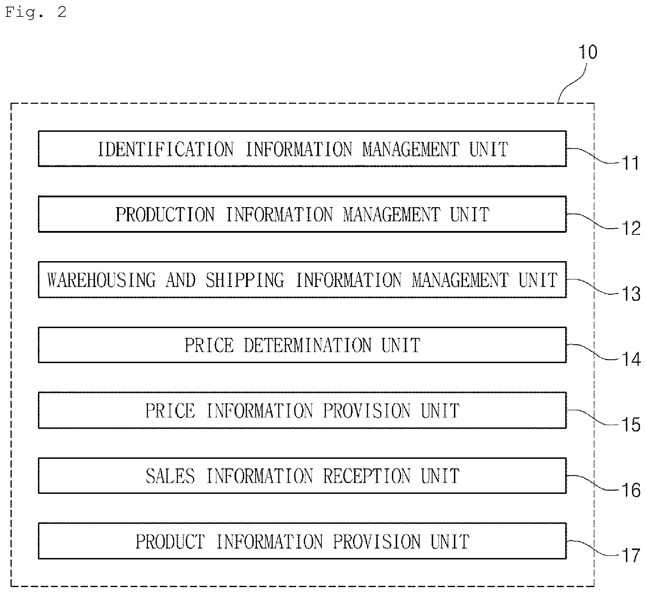

FIG. 1 is a configuration diagram showing the overall configuration of a physical distribution management system according to an embodiment of the present invention, and FIG. 2 is a block diagram showing the configuration of a physical distribution management server included in the physical distribution management system according to the embodiment of the present invention.

As shown in FIG. 1, the physical distribution management system according to the embodiment of the present invention includes a physical distribution management server 10 that, via communication with other remote devices over a network N, collects required information from the other devices, manages physical distribution, processes the collected information, and determines the price of a management target product.

The physical distribution management server 10 is an information processing device that communicates with other remote information processing devices, and may be managed by a service provider who provides physical distribution management and price management services. In particular, the physical distribution management server 10 may be configured to include one or more hardware servers, and may be composed of a server group including a plurality of servers. Furthermore, the plurality of servers may also communicate with each other over the network N.

In this case, the network N may be implemented as one or more of all types of wired/wireless networks, such as a Local Area Network (LAN), a Wide Area Network (WAN), a Value Added Network (VAN), a Personal Area Network (PAN), a mobile radio communication network, the Wireless Broadband (Wibro) Internet, a Mobile Worldwide Interoperability for Microwave Access (mobile WiMAX) network, a High Speed Downlink Packet Access (HSDPA) network, and a satellite communication network.

In particular, in the embodiment of the present invention, the physical distribution management server 10 may be operated by a producer who produces a management target product, or may be managed by the main agent of a third party who is entrusted with physical distribution management by the producer.

Furthermore, the physical distribution management system according to the embodiment of the present invention may include a production management device 20 that is used by the manager of a product that is produced at a production location P. The production management device 20 is a general information processing device, and may communicate with other remote devices over the network N. In particular, the production management device 20 communicates with the above-described physical distribution management server 10.

The production management device 20 may be specifically an enterprise resource planning system on a producer side for the product, and may record and manage the production information of the corresponding product from the start of the production of the product up to the end thereof. In this case, the production information may include information regarding all elements that may influence the quality or price of each product from the start of the production of the product up to the end thereof. For example, the raw material of the product, the price or quality level of the raw material, the start of production, the end of the production, the main agent of the production, the location of the production or a production line, a quality evaluation index after the completion of the production, information related to incidental expenses required for the production, information about a production environment, etc. may be recorded.

Furthermore, an encoding device (not shown) that communicates with the production management device 20 may be configured to enter identification information unique to each product in an identification tag, for example, an RFID tag, attached to the product (hereinafter the product may include a group of products) during a production process or a packaging step, and is also configured to allow the entered information to be stored in the production management device 20.

In this case, the identification tag is not necessarily limited to an RFID tag, and may include a barcode in an embodiment. The identification tag may include any technical means as long as the technical means includes the unique identification information of a product and can be read via another means like an RFID tag or a barcode.

Accordingly, the production management device 20 may store the above-described production information in association with each piece of identification information. In other words, one or more pieces of field information included in production information may be stored in association with each piece of identification information.

Furthermore, the production information and the identification information of the product managed by the production management device 20 are provided to the physical distribution management device 10.

Furthermore, the physical distribution management system according to the embodiment of the present invention may include at least one warehousing and shipping device 30 that is used until one product is finally sold.

The warehousing and shipping device 20 is a device that scans an identification tag attached to a product, receives identification information, and enables the identification information to be recorded. The warehousing and shipping device 20 provides warehousing and shipping information, including the identification information of the corresponding warehousing and shipping device 20 and the scanned identification information of the product, to the physical distribution management server 10. The warehousing and shipping device 20 may be composed of a general information processing device, and may communicate with the physical distribution management server 10 over the above-described network N in a wireless or wired manner. In particular, the warehousing and shipping device 20 may be provided as a portable terminal and directly communicate with the physical distribution management server 10, or may be provided as a portable terminal and indirectly communicate with the physical distribution management server 10 by way of a manager device (not shown) that may be provided at each of one or more distribution nodes present on a path from the production location of the product to the final consumption location thereof. In other words, the warehousing and shipping device 20 may be configured to include a module adapted to scan the identification tag of the product and a module adapted to communicate with the physical distribution management server 10 and transfer the scanned identification information, and may include one or more information processing devices in terms of hardware.

The warehousing and shipping device 20 may be provided at each of the one or more distribution nodes present on the path form the production location of the product to the final consumption location thereof, for example, the production location P, an intermediate distribution location W (for example, a wholesale store, a physical distribution warehouse, or the like), and a final sales location R. Furthermore, the warehousing and shipping device 20 may be provided at a transportation means, such as a physical distribution truck or the like, which connects the production location P, the intermediate distribution location W, and the final sales location R. In other words, the distribution node may be any main agent present between the production location of the product and the final consumption location thereof, or may be a location or a means that is operated by the corresponding main agent.

Accordingly, when the product is warehoused or shipped at the distribution node, the warehousing and shipping device 20 may generate warehousing or shipping information, and may transfer the warehousing or shipping information to the physical distribution management server 10.

In this case, the warehousing and shipping information may include the identification information of a warehousing or shipping target product, information about a distribution node for the warehousing or shipping target product (for example, the identification information of a wholesaler, the identification information of a physical distribution warehouse, the identification information of a shipper or a transportation means, or the like), and information about whether the corresponding warehousing and shipping information is related to warehousing or shipping.

Furthermore, in the embodiment of the present invention, the warehousing and shipping information may include profit information that is selected by a shipper, a wholesaler, the operator of a physical distribution warehouse, or the like present at the distribution node depending on an embodiment.

In other words, when a product is warehoused, the above-described warehousing and shipping device 30 receives profit information, including a desired profit rate, a desired profit amount, or the like for the product to be transported, to be sold to a retailer or to be stored, from a person in charge who warehouses the corresponding product, may include the profit information in warehousing and shipping information, and may provide the warehousing and shipping information to the physical distribution management server 10.

Meanwhile, the physical distribution management system according to the embodiment of the present invention may include a product sales device 40 that is provided at the final sales location R of the product. The product sales device 40 is a terminal that communicates with other remote devices and finally sells the product, and may be implemented as a general information processing device.

The product sales device 40 communicates with the physical distribution management server 10 over the network N, and, in particular, may receive the final price information of the product from the physical distribution management server 10. For this purpose, the product sales device 40 reads the identification information from the identification tag of the product, requests the provision of final price information by transmitting the identification information to the product sales device 40, and is paid an amount corresponding to the product by using received information when receiving the final price information of the product accordingly.

In this case, the product sales device 40 may transfer the sales information of the product to the above-described physical distribution management server 10. In this case, the sales information is adapted to transfer information about the intention of selling the product or information about the completion of the sales of the product to the physical distribution management server 10, and includes the identification information of the product.

Furthermore, according to the embodiment of the present invention, a service server 50 may be included in the system. The service server 50 is an information processing device that is operated by a service provider who provides a location-based service adapted to collect the current location and price information of each product from the physical distribution management server 10 and then provide the current location and price information to users. The service server 50 collects the current location information and price information of the product from the physical distribution management server 10 over the network N. In this case, the service server 50 and the physical distribution management server 10 may have a third party relationship, or the service server 50 may be integrated with the physical distribution management server 10. In the case of the third party relationship, the service server 50 may use an API that is provided by the physical distribution management server 10.

Furthermore, the service server 50 provides information about the location and price of the product, searched for by the user, to a user via a webpage run by a web browser or via an application program other than a web browser. In this case, the location of the product may be calculated based on the warehousing and shipping records of the product via the warehousing and shipping device 30, and the price of the product may be calculated by the physical distribution management server 10.

Furthermore, in this case, the user may be a wholesaler, a retailer, a final consumer or the like who desires to purchase the product.

Meanwhile, the user may use a user terminal 60 in order to access the service that is provided by the service server 50. The user terminal 60 is a general information processing device, and may be implemented as a computer, a portable terminal, a television, a wearable device, or the like that that can access a remote server or connect with other terminals and a server over the network N. In this case, the computer includes, for example, a notebook, a desktop, or a laptop on which a web browser has been installed. The portable terminal is, for example, a wireless communication device ensuring portability and mobility, and may include all types of handheld wireless communication devices, such as a Personal Communication System (PCS) terminal, a Personal Digital Cellular (PDC) terminal, a Personal Handyphone System (PHS) terminal, a Personal Digital Assistant (PDA), a Global System for Mobile communications (GSM) terminal, an International Mobile Telecommunication (IMT)-2000 terminal, a Code Division Multiple Access (CDMA)-2000 terminal, a W-Code Division Multiple Access (W-CDMA) terminal, a Wireless Broadband (Wibro) Internet terminal, a smartphone, and a Mobile Worldwide Interoperability for Microwave Access (mobile WiMAX) terminal. Furthermore, the television may include an Internet Protocol Television (IPTV), an Internet Television (Internet TV), a terrestrial TV, a cable TV, etc. Furthermore, the wearable device is, for example, an information processing device of a type that can be directly worn on a human body, such as a watch, glasses, an accessory, a dress, shoes, or the like, and may access a remote server or connect with terminals over a network directly or by way of another information processing device.

The final consumer, the retailer, the wholesaler, or the like may transfer a search request for the product to be purchased to the service server 50 by using his or her own user terminal 60. In this case, the user terminal 60 may receive the current location thereof from a communication device, such as a GPS module, an Internet module, or the like, or directly from the user, and may transfer the current location to the service server 50.

Accordingly, the service server 50 may provide information about the location of the product, for which the search request has been made, based on the location of the user terminal 60. In this case, information about the retrieved prices of the product, for example, a basic price to be described later, a distribution price, and a final price, may be provided together. In particular, the basic price or distribution price may be provided to a user who has accessed the service via the user account of the retailer or the wholesaler previously registered in the service server 50.

In this case, the service server 50 or physical distribution management server 10 has information about each type of product, i.e., a search target, previously registered, stores the information about each type of product, and holds a product code corresponding to the type of product. The identification information encoded in the identification tag of each product includes not only a serial number unique to each product but also a product code adapted to enable the type of product to be identified. The service server 50 or physical distribution management server 10 may previously store a correspondence relationship between the product code and the type of product in order to perform accurate physical distribution management. For example, for the same medicine "Amodipin," although a separate serial number is assigned to an individual unit product, a product code corresponding to the product type of Amodipin is also assigned in order to enable the product to be identified as Amodipin. In other words, the same product code is assigned to all Amodipin to be distributed. Accordingly, when a specific user searches for the product "Amodipin," the service server 50 or physical distribution management server 10 may search for identification information including the product code corresponding to Amodipin.

In other words, the identification information recorded in the identification tag of the product may include the serial number adapted to enable each of the same type of products to be identified as described above, and thus not only the type of product but also an individual unit product may be identified via the identification information. Accordingly, the service server 50 or physical distribution management server 10 can track the distribution path of the individual product. When the same type of individual products have different distribution paths, the differentiation between the prices thereof may be provided based on differences between the distribution paths.

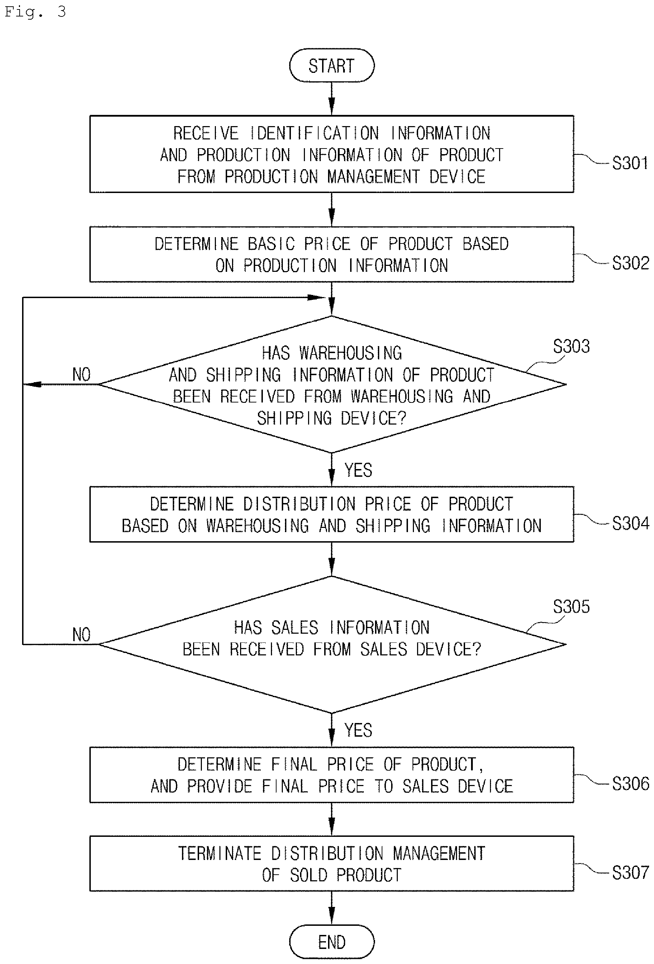

The greater detailed configuration of the above-described physical distribution management server 10 will be described with reference to FIG. 3 below.

The physical distribution management server 10 according to the embodiment of the present invention may include an identification information management unit 21. The identification information management unit 11 manages the identification information of a product. The identification information management unit 11 may manage identification information previously assigned to a specific product, and may selectively manage pieces of identification information not assigned to products and provide the pieces of identification information to the production management device 20.

The identification information management unit 11 may receive and store identification information newly assigned to a specific product by the production management device 20, and may delete identification information corresponding to sales information received by a sales information reception unit 16 to be described later or classify the identification information as identification information to be reused (to be assigned to a new product).

The physical distribution management server 10 according to the embodiment of the present invention may include a production information management unit 12. The production information management unit 12 may receive the identification information of a specific product and production information corresponding thereto from the production management device 20, and may store production information in association with the corresponding identification information. As described above, various types of field information may be subordinate to the production information, and all these various types of field information may be stored in association with the identification information.

Furthermore, the physical distribution management server 10 according to the embodiment of the present invention may include a warehousing and shipping information management unit 13. The warehousing and shipping information management unit 13 receives and records the identification information of a product to be warehoused or shipped, information about whether the product has been warehoused or shipped, and the identification information of a distribution node at which warehousing and shipping is performed from the above-described warehousing and shipping device 30.

For example, when a physical distribution warehouse is included in a distribution path, the physical distribution management server 10 receives warehousing information about the warehousing of a specific product from the warehousing and shipping device 30 provided in the physical distribution warehouse and stores the warehousing information, thereby identifying the location of the corresponding product as the corresponding physical distribution warehouse. Thereafter, when shipping information indicating that the corresponding product has been shipped from the physical distribution warehouse is received, the shipping information may be sequentially accumulated and stored after previously received warehousing information.

In this case, the identification information of the warehousing and shipping device 30 indicating warehousing or shipping may be previously recorded in the physical distribution management server 10, and information about a manager who manages the corresponding warehousing and shipping device 30 and a related distribution node may be previously registered in association with the identification information of the warehousing and shipping device 30. Accordingly, only by receiving the warehousing and shipping information, the physical distribution management server 10 may identify a main agent who currently manages the corresponding product, and may also identify a location where the product is located. Furthermore, the storage period and distribution time of the corresponding product may be identified together via a time interval between warehousing and shipping and a time interval between shipping and warehousing.

Furthermore, the physical distribution management server 10 according to the embodiment of the present invention may include a price determination unit 14. The price determination unit 14 is a calculation means that determines the price of each product. The price determination unit 14 may calculate the basic price of the product corresponding to specific identification information based on production information stored in association with the corresponding identification information.

Thereafter, the price determination unit 14 may determine or renew the distribution price of each product whenever the product goes through each distribution node and new warehousing and shipping information is received.

In this case, the basic price may be set by a producer, be included in production information, and be received from the production management device 10, or may be included in production information, be based on a basic price set by a producer, and be calculated by referring to other field information included in the production information. For example, when the price of a raw material is inexpensive or the quality level of the raw material is relatively low, a basic price may be calculated as a lower value. The basic price of a product directly produced by a company may be calculated as a higher value than that of an OEM product. However, this is merely an example, and may be calculated based on all indices, such as a production process, a production environment, and a market environment (an exchange rate, a situation of a competitor, or the like), which influence the quality of the product or competitiveness.

Furthermore, the distribution price may be determined by the price determination unit 14 by adding or subtracting a value to or from the basic price of the product by considering the warehousing and shipping information. In other words, the price determination unit 14 may newly calculate or renew the distribution price of a specific product whenever new warehousing and shipping information is received for the corresponding product. In this case, the distribution price may be first calculated when the product is initially shipped from a production location P, and may be continuously renewed until the product is finally warehoused at a final sales location R.

For example, when the distribution period of the product is short and the product has been transported by a shipper who possesses more advanced transportation equipment, the distribution price may be set to a relatively high price.

Furthermore, the price may be varied depending on a wholesaler to whom the product has been turned over. Accordingly, the price determination unit 14 may determine the distribution price based on the identification information of a wholesaler corresponding to a distribution node at which the product has been warehoused in the warehousing and shipping information.

In this case, the price determination unit 14 may receive the profit information from the manager of the warehousing and shipping device 30 that provides warehousing and shipping information as described above, and may set the distribution price of the product differently based on the profit information. In other words, the distribution price of the product warehoused for a wholesaler who sets a higher profit margin may be determined to be a higher price than that of a product warehoused for a wholesaler who sets a lower price. The retailer may also transfer the profit information to the price determination unit 14 when the product is warehoused.

Meanwhile, the price determination unit 14 may determine the final price of the product when sales information is received by a sales information reception unit 16 to be described later. The final price of the product may be determined based on the most finally renewed distribution price and a sales period (a period that has elapsed after the product had been warehoused for a retailer) by referring to the profit information of the retailer.

It will be apparent that the most finally renewed distribution price may be determined to be the final price by referring to the profit information of the retailer.

The price information determined by the price determination unit 14 as described above may be provided to the sales device 40 via the price information provision unit 15, or may be transferred to the warehousing and shipping device 30 and provided to the manager of a distribution node that has requested the price information of the product.

In particular, when the sales information of a specific product is received from the sales device 40, the price information provision unit 15 extracts the price information of the corresponding product, and provides the price information of the corresponding product to the sales device 40. In this case, the sales information is information indicating the intention of selling the specific product as described above, and includes the identification information of the corresponding product. The price information provision unit 15 may provide information about the price of the corresponding product, determined by the price determination unit 14, to the sales device 40. In this case, the price provided to the sales device 40 may become a final price.

Alternatively, when the manager of the warehousing and shipping device 30 makes a request, the price information provision unit 15 may provide information about the price, finally determined for the product, to the warehousing and shipping device 30. In this case, the finally determined price refers to the temporally most finally determined price of the basic price, distribution price, and final price of the corresponding product. In other words, for example, when the product was produced and is not shipped yet, only a basic price has been generated for the corresponding product, and thus only information about the basic price can be provided.

Meanwhile, the physical distribution management server 10 according to the embodiment of the present invention may include a sales information reception unit 16. The sales information reception unit 16 may receive the identification information of a specific product as sales information from the final sales device 40, and may finally sell the corresponding product. Accordingly, the identification information of the corresponding product may be deleted, or may be assigned to a new product. Furthermore, all information associated with the identification information of the corresponding product may be deleted.

Meanwhile, the physical distribution management server 10 according to the embodiment of the present invention may include a product information provision unit 17. The product information provision unit 17 may provide information about the current location or price of a specific product to the above-described user terminal 60 or service server 50 in response to a request from the user terminal 60 or service server 50. Accordingly, the user, the retailer, the wholesaler or the like is enabled to search for the closest location, quantity, price, etc. of a product that he or she desires to purchase.

According to the above-described technology, all the production and distribution processes of a product are managed by a single main agent via the physical distribution management server 10, and not only a consumer but also a retailer, a wholesaler, or the like can easily search for a product present at the closest location or a product having the most inexpensive price.

FIG. 3 is a flowchart illustrating a price determination method using a physical distribution management system according to an embodiment of the present invention.

The price determination method using a physical distribution management system according to the embodiment of the present invention starts with step S301 at which the physical distribution management server 10 receives both identification information, encoded in the identification tag of a product, and production information from the production management device 20 and stores these pieces of information in association with each other.

Thereafter, the physical distribution management server 10 may determine the basic price of the product corresponding to the identification information associated with the corresponding production information based on the received production information at step S302.

Furthermore, when the warehousing or shipping information of the product is received from the warehousing and shipping device 30 present at each distribution node during a physical distribution process at step S303, the physical distribution management server 10 registers the corresponding warehousing and shipping information in association with the identification information of the product, and determines and stores the distribution price of the product based on the warehousing and shipping information at step S304. Before the distribution price is not determined yet, the distribution price is calculated based on the basic price. In contrast, after the distribution price has been determined, a distribution price to be renewed may be calculated based on the final distribution price.

In this case, the distribution price may be determined by considering profit information input by a retailer, a wholesaler, a shipper, a physical distribution warehouse manager, or the like, as described above.

Furthermore, according to the embodiment of the present invention, when the sales information of the warehoused product is received from the sales device 40, the physical distribution management server 10 may determine the final price of the corresponding product and may provide the information about the final price to the sales device 40 at step S306. This final price is a price corresponding to a final retail price. The final price may be a price identical to a distribution price when the product is warehoused for a retailer, or may be a price finally determined by considering both the distribution price, when the product is warehoused for a retailer, and a temporal factor.

Thereafter, the physical distribution management server 10 may treat the product, for which sales information has been received, as a sold product, may determinate the distribution management of the product, and may delete or separately classify all related information at step S307.

The price determination method according to the embodiment shown in FIG. 3 includes steps that are processed in the system shown in FIG. 1 in a time sequential manner. Accordingly, the above descriptions of the system shown in FIG. 1, which are omitted below, may be applied to the price determination method according to the embodiment shown in FIG. 3.

The price determination method according to the embodiment described via FIG. 3 may be also implemented in the form of a storage medium including computer-executable instructions, such as a program module executed by a computer. A computer-readable medium may be any available medium accessible to a computer, and includes all volatile and non-volatile media and separable and non-separable media. Furthermore, the computer-readable medium may include both a computer storage medium and a communication medium. The computer storage medium includes all volatile and non-volatile media and separable and non-separable media implemented using any method or technique for storing information, such as computer-readable instructions, data structures, program modules, and other data. The communication medium typically includes computer-readable instructions, data structures, program modules, other data of a modulated data signal, such as carriers, or other transmission mechanisms, and also includes any information transfer media.

Furthermore, the price determination method according to an embodiment of the present invention may be implemented using a computer program (or a computer program product) including a computer-executable instructions. The computer program includes programmable machine instructions processed by a processor, and may be implemented using a high-level programming language, an object-oriented programming language, an assembly language, or a machine language. Furthermore, the computer program may be recorded on a variety of types of computer-readable storage media (e.g., memory, a hard disk, a magnetic/optical medium, or a solid-state drive (SSD)).

Accordingly, the price determination method according to an embodiment of the present invention may be implemented when a computer program, such as that described above, is executed by a computing device. The computing device may include at least some of a processor, memory, a storage device, a high-speed interface connected to the memory and a high-speed extension port, and a low-speed interface connected to a low-speed bus and the storage device. These components are interconnected using various buses, and may be mounted on a common motherboard or may be mounted using other appropriate methods.

In this case, the processor may process instructions within the computing device. The instructions may be, for example, instructions stored in memory or a storage device in order to display graphic information adapted to provide a graphic user interface (GUI) on an external input/output device, such as a display connected to a high-speed interface. As another embodiment, a plurality of processors and/or a plurality of buses may be appropriately used along with a plurality of pieces of memory and a plurality of memory forms. Furthermore, the processor may be implemented using a chipset formed by chips that include a plurality of analog and/or digital processors.

Furthermore, the memory stores information within the computing device. As an example, the memory may include a volatile memory unit or a set of volatile memory units. As another example, the memory may include a non-volatile memory unit or a set of non-volatile memory units. Furthermore, the memory may be another type of computer-readable medium, such as a magnetic or optical disk.

Furthermore, the storage device may provide a large storage space to the computing device. The storage device may be a computer-readable medium, or may be a component including the computer-readable medium. For example, the storage device may also include devices within a storage area network (SAN) or other components, and may be a floppy disk device, a hard disk device, an optical disk device, a tape device, flash memory, or a similar semiconductor memory device or device array.

The above detailed description of the present invention is merely for an illustrative purpose. It will be understood that those having ordinary knowledge in the art to which the present invention pertains can easily make modifications and variations without departing from the technical spirit and essential features of the present invention. Therefore, the above-described embodiments are illustrative in all aspects, and are not limitative. For example, each component described as being in a single form may be practiced in a distributed form. In the same manner, components described as being in a distributed form may be practiced in an integrated form.

The scope of the present invention is defined by the attached claims, rather than the detailed description. Furthermore, all modifications and variations derived from the meanings, scope and equivalents of the claims should be construed as falling within the scope of the present invention.

### Industrial Applicability

The present invention relates to a physical distribution management system and a price determination method using the same, and more particularly to a physical distribution management system that manages physical distribution by using the identification tag of each product, thereby enabling the value of the product to be minutely evaluated and the price of the product to be determined accordingly, and a price determination method using the same. The present invention has industrial applicability to a physical distribution management system.

## Claims

1. A price determination method using a physical distribution management system, which is performed by a physical distribution management server, the price determination method comprising:
when identification information and production information of a product are received from a production management device operated by a producer, determining a basic price of the product based on the production information;
when warehousing and shipping information of the product is received from a warehousing and shipping device provided at each of one or more distribution nodes included in a distribution process of the product, determining a distribution price, determined by renewing the basic price of the product, based on the warehousing and shipping information; and
when the identification information of the product is received from a sales device operated by a final seller of the product, determining a final distribution price of the product or a final price calculated by renewing the final distribution price of the product, and providing the final distribution price or final price to the sales device.

2. The price determination method of claim 1, wherein the production information comprises at least one of a raw material of the product, a price or quality level of the raw material, a start of production, an end of the production, a main agent of the production, a location of the production or a production line, a quality evaluation index after completion of the production, information related to incidental expenses required for the production, and information related to a production environment.

3. The price determination method of claim 1, wherein the warehousing and shipping information is received from the warehousing and shipping device provided at the distribution node when the product is warehoused or shipped at or from the distribution node, and is configured to include identification information of the distribution node, at or from the product is warehoused or shipped, and the identification information of the product.

4. The price determination method of claim 1, further comprising, when price information of the product is requested by a user terminal, providing information about a finally determined one of the basic price, distribution price, and final price of the product to the user terminal.

5. The price determination method of claim 4, wherein providing the information about the finally determined price to the user terminal comprises, when a search request for a product of a type identical to a type of the product is received from the user terminal, providing a current location of a product, corresponding to a current location of the user terminal among all products of the type identical to the type of the product, and the information about the final determined price to the user terminal.

6. The price determination method of claim 1, wherein determining the distribution price comprises:
receiving profit information, including information about a profit margin desired by a manager corresponding to the distribution node, from the warehousing and shipping device provided at the distribution node; and
determining the distribution price based on the profit information.

7. The price determination method of claim 1, further comprising, when sales information of the product is received from the sales device, terminating the identification information corresponding to the product and management of the product associated with the identification information.

8. The price determination method of claim 7, further comprising managing each piece of identification information;
wherein managing the identification information comprises:
providing the identification information to be associated with a product to the production management device;
when the identification information of the product is received from the sales device, initiating product management of the received identification information; and
after terminating the management of the product, deleting the identification information associated with the product, or providing the identification information associated with the product to the production management device so that the identification information will be associated with a new product.

9. A computer program recorded in a medium to perform the method according to claim 1.

10. A physical distribution management server for receiving identification information and production information of a product from a production management device operated by a producer of a product, receiving warehousing and shipping information from a warehousing and shipping device provided at each of one or more distribution nodes included in a distribution process of the product, and managing distribution of the product, the physical distribution management server comprising:
a production information management unit configured to receive production information of the product from the production management device, and to store the production information of the corresponding product in association with the identification information of the product;
a warehousing and shipping information management unit configured to receive warehousing and shipping information of the product from the warehousing and shipping device, and to accumulate and store the warehousing and shipping information of the corresponding product in association with the identification information of the product;
a price determination unit configured to, when production information of a certain product is received, determine a basic price of the certain product based on the production information of the corresponding product, and renew a distribution price determined based on the basic price whenever the warehousing and shipping information of the certain product is received, thereby determining a price of the certain product.

11. The physical distribution management server of claim 10, further comprising a price information provision unit configured to, when sales information of the certain product is received from a sales device used by a seller of the certain product, provide information about a final distribution price renewed for the certain product by the price determination unit, or provide information about a final price calculated based on the final distribution price.

12. The physical distribution management server of claim 10, further comprising a product information provision unit configured to, when a search request for a certain type of product is received from a user terminal of a certain user, extract identification information of the certain type of product, located at a distribution node adjacent to current location information of the user terminal received from the user terminal, based on warehousing and shipping information stored in association with identification information of a product, and provide information about the distribution node, at which the extracted identification information is located, to the user terminal.
